# EUROPEAN PATENT SPECIFICATION

(11) **EP 3 541 107 B1**
(45) Date of publication and mention of the grant of the patent: **09.08.2023**
(21) Application number: 17868742.2
(22) Date of filing: 17.10.2017
(51) Int. Cl.: H04W 16/18, H04W 24/02

(54) **OVERSHOOT COVERAGE PROCESSING METHOD AND DEVICE**
VERFAHREN UND VORRICHTUNG ZUR VERARBEITUNG VON ÜBERSCHWINGUNGSABDECKUNG
PROCÉDÉ ET DISPOSITIF DE TRAITEMENT DE COUVERTURE DE DÉPASSEMENT

(30) Priority: 08.11.2016 CN 201610979743
(43) Date of publication of application: 18.09.2019
(73) Proprietor: Shanghai ZTE Software Co., Ltd., Shanghai 201203 (CN)
(72) Inventor: WANG, Pengzhou, Shanghai 201203 (CN); XU, Haifeng, Shanghai 201203 (CN)
(74) Representative: Regimbeau
(86) International application number: PCT/CN2017/106536
(87) International publication number: WO 2018/086445

(56) References cited:
- WO-A1-2016/095826
- WO-A2-02/103918
- CN-A- 101 600 213
- CN-A- 101 827 372
- CN-A- 102 202 330
- CN-A- 102 333 320
- CN-A- 104 378 765
- US-A1- 2013 331 079
- US-A1- 2014 071 856
- US-A1- 2016 029 253
- US-A1- 2016 165 469

## Description

### TECHNICAL FIELD

The present invention relates to mobile communications and more particularly relates to an overshoot coverage processing method, device and storage medium.

### BACKGROUND

In network planning of communications equipment, relevant personnel typically need to design parameters such as antenna height, orientational angle, inclination angle, and transmit power of a base station in connection with the distances between base station sites as well as data about the surrounding terrain and surface features. In this context, the relevant personnel are likely to blindly design some parameters resulting from a poor knowledge of the surrounding terrain and surface features of some base stations. An unreasonable antenna design will result in far-end overshoot coverage. In particular, overshoot coverage is more likely to occur in some cells that transmit signals along a road or on both sides of a river where wireless transmission is superior.

Secondly, in the initial network construction stage, operators would install base stations with high power and large coverage in some regions. These base stations have too high antennas and too large coverage which might cause overshoot coverage per se. After several rounds of capacity expansion, many coverage sectors are added, so that the antenna height of the initial base stations should be appropriately decreased; otherwise, it would be bound to cause interference with the surrounding base station sectors and meanwhile may lead to overshoot coverage. In some cases, in adjusting the inclination angle of an antenna during the network optimization process, if the mechanical downtilt angle reaches up to 10 degrees, the waveform in the horizontal direction would be severely distorted, and the overshoot coverage may also easily occur. Furthermore, in urban areas, many site resources are valuable and it is difficult to obtain a good site. If some sites have too high antennas and some other sites have too low antennas, then it would be difficult to avoid overshoot coverage. In addition, because of various reasons, a number of far-away signal sources must be amplified and used as the remote sector signal of repeater equipment, which appears at the far end of the repeater equipment where it should not appear, and this will also result in the overshoot coverage.

The overshoot coverage will result in the islanding effect, which not only severely affects indicators including a handover success rate, a call drop rate, and a voice quality of an overshooting cell, and a handover success rate of a neighboring cell, but results in co-channel interference and the deteriorated downlink quality of other cells. Meanwhile, the operators generally take a cell identifier as the charging standard. If another cell appears in a specified region, a charging error would be caused, severely affecting the user experience resulting in customer complaints.

The overshoot coverage is difficult to find, and may not be able to be found even through road testing. It is difficult to determine the overshoot coverage by simply determining whether parameters, such as the distances between base stations, the orientational angle and power, exceed a normal threshold. Even if the overshoot coverage can be detected more accurately, significant manpower and time cost are required for adjustment and resolution.

Therefore, a complete set of methods and equipment is required to perform a more accurate automatic detection and resolution of the overshoot coverage. Currently, a number of methods and devices have been provided for automatic detection of the overshoot coverage. However, automatic resolution of the overshoot coverage remains to be solved. If an the neighboring relationship of an overshooting cell is simply deleted, then when the neighboring cell is detected again, the neighboring relationship would still be automatically added through Auto Neighbor Relation (ANR) of an operation and maintenance center (OMC) self-organizing network (SON).

US20160029253A1 discloses a system and method to automatically classify a target cell as a boomer cell for a source cell to assist the source cell in adding or rejecting the target cell as a valid neighbor of the source cell. Such classification is based on the distance between the source and target cells, and the tier value indicating the number of layers of cell sites between the source and target cells.

US20130331079A1 discloses a method of operating a cellular telecommunications network to implement self-organizing network (SON) functionality, a network manager (NM) SON function is implemented in a NM, and a plurality of network elements (NEs) each implement a NE SON function. Each NE SON function is associated with one or more network cells. The NM SON function obtains operational data relating to the network and evaluates a current network condition. Based on the current network condition, the NM SON function determines an allowable set of configuration parameters and conditional actions, which defines combinations of cell configuration parameters that a NE SON function is permitted to use when reconfiguring a cell. The NM SON function provides the allowable set in a NE configuration attribute sent to the NE SON function. The conditional actions are configured in the NE SON function and ensure consistency and integrity of decisions taken at individual cells.

### SUMMARY

To solve the above problem, the present invention provides device method, device, and storage medium for processing an overshoot coverage which can automatically solve the overshoot coverage problem. The present disclosure provides a method for processing an overshoot coverage according to independent claim 1, a device for processing an overshoot coverage according to claim 6, and a storage medium according to claim 8. Further improvements and embodiments are provided in the dependent claims.

To achieve the object of the present invention, the present invention also provides a method for processing an overshoot coverage. The method includes the following operations.

A serving cell marks a detected overshoot coverage neighboring cell and deletes the overshoot coverage neighboring cell.

In response to receiving within a preset time range a request for adding the overshoot coverage neighboring cell within a preset time range, the serving cell delivers an overshooting cell adjustment policy for adjusting a parameter of the overshoot coverage neighboring cell to the overshoot coverage neighboring cell, to reduce a coverage area of the overshoot coverage neighboring cell.

The present invention further provides a method for processing an overshoot coverage. The method includes the following operations.

An automatic detection is performed as to whether an overshoot coverage is present in an entire network or in a specified serving cell according to a preset policy.

In response to detecting an overshoot coverage neighboring cell, an overshooting cell adjustment policy for adjusting a parameter of the overshoot coverage neighboring cell is delivered to a base station located in the overshoot coverage neighboring cell, to notify the overshoot coverage neighboring cell to perform a self-adjustment.

The present invention further provides a device for processing an overshoot coverage. The device includes an overshoot coverage pre-processing module and an overshoot coverage processing module.

The overshoot coverage pre-processing module is configured to mark a detected overshoot coverage neighboring cell and delete the overshoot coverage neighboring cell.

The overshoot coverage processing module is configured to, in response to receiving a request for adding the overshoot coverage neighboring cell within a preset time range, deliver an overshooting cell adjustment policy for adjusting a parameter of the overshoot coverage neighboring cell to the overshoot coverage neighboring cell, to reduce a coverage area of the overshoot coverage neighboring cell.

The present invention further provides a device for processing an overshoot coverage. The device includes a detection module and a second deliverance module.

The detection module is configured to automatically detect whether an overshoot coverage is present in an entire network or in a specified serving cell according to a preset policy.

The second deliverance module is configured to, in response to detecting an overshoot coverage neighboring cell, deliver an overshooting cell adjustment policy for adjusting a parameter of the overshoot coverage neighboring cell to a base station located in the overshoot coverage neighboring cell, to notify the overshoot coverage neighboring cell to perform a self-adjustment.

The present invention further provides a storage medium, which stores program code configured for performing any of the methods described above.

According to the technical solution of the present application, a serving cell marks and deletes a detected overshoot coverage neighboring cell, and in response to receiving a request for adding the overshoot coverage neighboring cell within the preset time range, the serving cell delivers to the overshoot coverage neighboring cell an overshooting cell adjustment policy for adjusting the parameter of the overshoot coverage neighboring cell, to reduce a coverage area of the overshoot coverage neighboring cell. In the technical solution of the present disclosure, when the overshoot coverage neighboring cell is detected, on one hand the detected overshoot coverage neighboring cell is deleted, and on the other hand, an overshooting cell adjustment policy for adjusting the parameter of the overshoot coverage neighboring cell is delivered to the overshoot coverage neighboring cell, thereby reducing the coverage area of the overshoot coverage neighboring cell, automatically solving the overshoot coverage problem.

Other features and advantages of the present invention will be elaborated hereinafter in the description and, moreover, partially become apparent from the description, or will be understood through implementation of the present invention. The objects and other advantages of the present invention may be implemented and obtained through structures set forth in the description, claims and drawings.

### BRIEF DESCRIPTION OF DRAWINGS

The drawings described herein are used to provide a further understanding of the present invention, and form a part of the present application. The exemplary embodiments and descriptions thereof in the present invention are used to explain the present invention and are not intended to limit the present invention in any improper way. In the drawings:
FIG. 1 is a flowchart illustrating a method for processing an overshoot coverage according to the present invention;
FIG. 2 is a flowchart illustrating an embodiment of invention method for processing an overshoot coverage according to the present invention;
FIG. 3 is a block diagram illustrating invention device for processing an overshoot coverage according to the present invention;
FIG. 4 illustrates another device for processing an overshoot coverage according to the present invention; and
FIG. 5 illustrates another method for processing an overshoot coverage according to the present invention.

### DETAILED DESCRIPTION

Objects, technical solutions and advantages of the present invention will be clearer from a detailed description of embodiments of the present invention in conjunction with the drawings. It is to be noted that the embodiments and features disclosed in the present application may be combined with each other, if no contradiction is present.

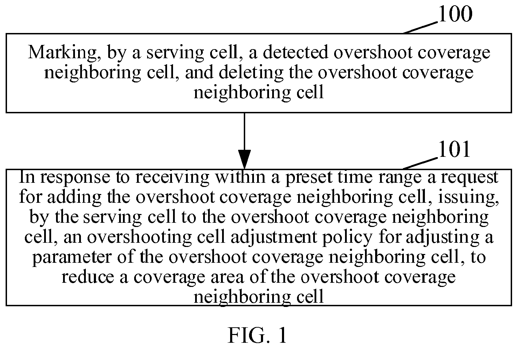

FIG. 1 is a flowchart illustrating a method for processing an overshoot coverage according to the present invention. As illustrated in FIG. 1, the method includes the following operations.

In step 100, a serving cell marks a detected overshoot coverage neighboring cell and deletes the overshoot coverage.

In this step, the serving cell may mark the detected overshoot coverage neighboring cell in the following manner, i.e., storing the detected overshoot coverage neighboring cell into a temporary neighboring cell blacklist, or labeling the detected overshoot coverage neighboring cell to mark the detected overshoot coverage neighboring cell as a temporary black neighboring cell.

In this step, deleting the overshoot coverage neighboring cell is deleting adjacency information of the serving cell and the overshoot coverage neighboring cell.

In this case, if a user equipment (UE) in the serving cell detects the overshoot coverage neighboring cell again and reports a temporary neighboring cell addition request to a base station located in the serving cell, the base station of the serving cell will discard the temporary neighboring cell addition request and perform no processing.

In step 101, in response to receiving a request for adding the overshoot coverage neighboring cell within a preset time range, the serving cell delivers an overshooting cell adjustment policy for adjusting a parameter of the overshoot coverage neighboring cell to the overshoot coverage neighboring cell, to reduce a coverage area of the overshoot coverage neighboring cell.

The overshooting cell adjustment policy includes, but is not limited to, automatically lowering a power amplification factor, a orientational angle or the like by a pre-configured stepping granularity.

In the technical solution according to the present invention, when the overshoot coverage neighboring cell is detected, the detected overshoot coverage neighboring cell is deleted, and on the other hand, the overshooting cell adjustment policy for adjusting the parameter of the overshoot coverage neighboring cell is delivered to the overshoot coverage neighboring cell, reducing the coverage area of the overshoot coverage neighboring cell, thereby automatically solving the overshoot coverage problem.

Optionally, the method further includes a step described below after step 100 and before step 101.

The base station located in the serving cell delivers the overshooting cell adjustment policy for adjusting the parameter of the overshoot coverage neighboring cell to a base station located in the overshoot coverage neighboring cell through an X2 interface, to notify the overshoot coverage neighboring cell to perform a self-adjustment. Here the X2 interface is an interface between e-NodeBs and used for supporting direct transmission of data and signaling. The overshooting cell adjustment policy includes, but is not limited to, automatically lowering the power amplification factor, the orientational angle or the like by the pre-configured stepping granularity, and reporting an adjustment result to a network management system such as an OMC SON for display. Here, the overshooting cell adjustment policy in the serving cell is configured by the OMC SON.

Alternatively, before step 100, when detecting the overshoot coverage neighboring cell, the OMC SON delivers the overshooting cell adjustment policy for adjusting the parameter of the overshoot coverage neighboring cell to the base station located in the overshoot coverage neighboring cell, to notify the overshoot coverage neighboring cell to perform a self-adjustment. An overshoot adjustment and processing policy includes, but is not limited to, automatically lowering the power amplification factor, the orientational angle or the like by the pre-configured stepping granularity, and reporting the adjustment result to the network management system for display.

In an embodiment, the method in the present invention further includes that the serving cell learns the detected overshoot coverage neighboring cell. The overshoot coverage neighboring cell is detected in a manner that the OMC SON automatically detects whether overshoot coverage is present in an entire network or in a specified serving cell according to a preset policy. An exemplary approach generally includes calculating a distance between the serving cell and a neighboring cell, the number of spaced cell layers and the like, comparing them against a preset threshold, and if the threshold is reached or exceeded, determining that a condition of a one-dimensional ultra-far neighboring cell is met, and then computing whether the one-dimensional ultra-far neighboring cell has other ultra-far neighboring cells with the same algorithm. If the number of the other ultra-far neighboring cells of the one-dimensional ultra-far neighboring cell reaches a preset threshold, it is determined that the one-dimensional ultra-far neighboring cell is an overshoot coverage cell, that is, the detected overshoot coverage neighboring cell.

In an embodiment, after step 101, if the serving cell receives the request for adding the overshoot coverage neighboring cell again within the preset time range, the serving cell repeatedly delivers the overshooting cell adjustment policy for adjusting the parameter of the overshoot coverage neighboring cell to the overshoot coverage neighboring cell to reduce the coverage of the overshoot coverage neighboring cell until the serving cell no longer receives the request for adding the overshoot coverage neighboring cell within the preset time range. The method in the present invention further includes steps described below.

The serving cell and the overshoot coverage neighboring cell each send a query request to the OMC SON, to query a change of a key performance indicator (KPI) of the serving cell or the overshoot coverage neighboring cell itself after an automatic adjustment. A query result is obtained.

If the KPI such as a handover success rate and a call drop rate of the serving cell is improved (for example, the handover success rate is greater than a pre-configured handover success rate improvement ratio threshold, the call drop rate is greater than a pre-configured call drop rate improvement ratio threshold, etc.) and the KPI such as the handover success rate and the call drop rate of the overshoot coverage neighboring cell does not deteriorate, it is considered that the overshoot coverage has been solved, the overshoot coverage neighboring cell is removed from the temporary neighboring cell blacklist of the serving cell. The overshoot coverage is automatically solved, the base station located in the serving cell reports information related to the serving cell and information related to the overshoot coverage neighboring cell such as a position, a name and the adjustment result to the OMC SON; and the OMC SON displays a result and updates a current configuration of the overshoot coverage neighboring cell.

If the KPI of the overshoot coverage neighboring cell deteriorates (for example, the handover success rate is greater than a pre-configured handover success rate deterioration ratio threshold, the call drop rate is greater than a pre-configured call drop rate deterioration ratio threshold, etc.), the overshoot coverage neighboring cell is notified to set an adjusted parameter such as the power amplification factor or the orientational angle back to an initial value, and the information related to the overshoot coverage neighboring cell, such as the position, the name and the adjustment result, is reported to the OMC SON. The OMC SON displays the result and does not update the current configuration of the overshoot coverage neighboring cell.

In an embodiment, after step 101, if the serving cell receives the request for adding the overshoot coverage neighboring cell again within the preset time range, the serving cell repeatedly performs step 101 in which the serving cell delivers the overshooting cell adjustment policy for adjusting the parameter of the overshoot coverage neighboring cell to the overshoot coverage neighboring cell to reduce the coverage area of the overshoot coverage neighboring cell. If the number of downward adjustment times reach a preset downward adjustment times threshold or a power of the overshoot coverage neighboring cell reaches a preset power threshold, the overshoot coverage problem still remains to be solved. The method in the present invention further includes the following operations.

If the KPI of the overshoot coverage neighboring cell does not deteriorate, the base station located in the overshoot coverage neighboring cell reports the information related to the overshoot coverage neighboring cell such as the position, the name and the adjustment result to the OMC SON; and the OMC SON displays the result and updates the current configuration of the overshoot coverage neighboring cell.

If the KPI of the overshoot coverage neighboring cell deteriorates, the overshoot coverage neighboring cell automatically sets the adjusted parameter such as the power amplification factor or the orientational angle back to a value before adjustment and the base station located in the overshoot coverage neighboring cell reports the information related to the overshoot coverage neighboring cell such as the position, the name and the adjustment result to the OMC SON; and the OMC SON displays the result and does not update the current configuration of the overshoot coverage neighboring cell. Meanwhile, in this scenario, the overshoot coverage remains to be solved, and the parameter such as the power amplification factor is rolled back; therefore, the serving cell will still receive the request for adding the overshooting cell as the neighboring cell. In this case, the overshoot coverage neighboring cell is not deleted from the temporary neighboring cell blacklist of the serving cell, preventing the overshoot coverage neighboring cell from being added again as the neighbor of the serving cell.

The method in the present invention will be described below in detail in conjunction with exemplary embodiments.

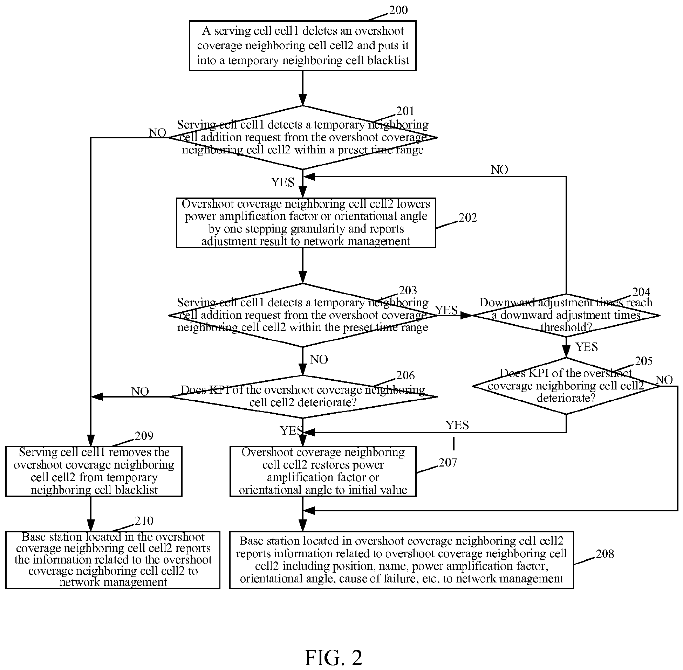

FIG. 2 is a flowchart illustrating an embodiment of a method for processing an overshoot coverage according to the present invention. In this embodiment, it is assumed that a serving cell is cell1, and an overshoot coverage neighboring cell is cell2. As illustrated in FIG. 2, the method exemplarily includes the following operations.

In step 200, according to a detection result and an overshooting cell adjustment policy, a base station located in the serving cell cell1 automatically deletes an adjacency between the serving cell cell1 and the overshoot coverage neighboring cell cell2 and adds the overshoot coverage neighboring cell cell2 into a temporary neighboring cell blacklist.

In this case, if a UE in the serving cell detects the overshoot coverage neighboring cell again and reports a temporary neighboring cell addition request to the base station located in the serving cell, the base station of the serving cell will discard the temporary neighboring cell addition request and perform no processing.

The method further includes the following operations before step 200.

An OMC SON delivers the overshooting cell adjustment policy to the base station located in the serving cell cell1.

The OMC SON automatically detects the overshoot coverage neighboring cell, and an exemplary implementation mainly includes enabling a SON overshoot coverage function and automatically detecting whether the serving cell cell1 has the overshoot coverage neighboring cell. The OMC SON may acquire and detect a parameter difference such as a physical distance between a specified cell and a neighboring cell of the specified cell, the number of cell layers, and a orientational angle, to obtain a one-dimensional overshoot neighboring cell of the serving cell. In this embodiment, it is assumed that the neighboring cell is cell2. Whether the parameter, such as the physical distance between the serving cell cell1 and the one-dimensional neighboring cell cell2, the number of cell layers spaced from the serving cell, and the orientational angle, reaches a preset threshold is detected; and if the parameter reaches the preset threshold, it may be determined that the one-dimensional neighboring cell cell2 is the overshoot coverage neighboring cell of the serving cell cell1.

After the OMC SON has automatically detected the overshoot coverage neighboring cell cell2, the method may further include that the OMC SON delivers the overshooting cell adjustment policy to a base station located in the overshoot coverage neighboring cell cell2.

Alternatively, after step 200, the base station located in the serving cell cell1 delivers the overshooting cell adjustment policy for adjusting a parameter of the overshoot coverage neighboring cell to the base station located in the overshoot coverage neighboring cell through an X2 interface, to notify the overshoot coverage neighboring cell to perform a self-adjustment. The overshooting cell adjustment policy includes, but is not limited to, automatically lowering a power amplification factor, the orientational angle or the like by a pre-configured stepping granularity, and reporting an adjustment result to a network management system for display. Here, the overshooting cell adjustment policy in the serving cell is configured by the OMC SON.

In step 201, it is determined whether the serving cell cell1 detects the temporary neighboring cell addition request from the overshoot coverage neighboring cell cell2 within a preset time range. If it detects the temporary neighboring cell addition request from the overshoot coverage neighboring cell cell2 within the preset time range, turn to step 202; otherwise, turn to step 209.

In step 202, the overshoot coverage neighboring cell cell2 lowers the power amplification factor or the orientational angle by one stepping granularity according to the obtained overshooting cell adjustment policy, and reports the adjustment result to the network management system.

In step 203, it is determined whether the serving cell cell1 detects the temporary neighboring cell addition request from the overshoot coverage neighboring cell cell2 within the preset time range. If it detects the temporary neighboring cell addition request from the overshoot coverage neighboring cell cell2 within the preset time range, turn to step 204; otherwise, turn to step 206.

In step 204, it is determined whether the number of downward adjustment times reaches a preset downward adjustment threshold. If it reaches the preset downward adjustment threshold, turn to step 205; otherwise, return to step 202.

The base station located in the serving cell cell1 and the base station located in the overshoot coverage neighboring cell cell2 cooperate with each other through the X2 interface and repeat step 202 to step 206 according to the overshooting cell adjustment policy within a range of the preset downward adjustment threshold until the overshoot coverage problem is solved, or until the downward adjustment times of the power amplification factor (or orientational angle) reach the preset downward adjustment threshold.

In step 205, it is determined whether a KPI (such as a handover success rate and a call drop rate) of the overshoot coverage neighboring cell cell2 deteriorates after automatic adjustment of the overshoot coverage neighboring cell cell2. If it deteriorates, turn to step 207; otherwise, turn to step 208.

For example, if the handover success rate is greater than a pre-configured handover success rate deterioration ratio threshold, the call drop rate is less than a pre-configured call drop rate deterioration ratio threshold, etc., it indicates that the KPI does not deteriorate. For another example, if the handover success rate is less than a pre-configured handover success rate improvement ratio threshold, the call drop rate is greater than a pre-configured call drop rate improvement ratio threshold, etc., it indicates that the KPI deteriorates.

In step 207, the overshoot coverage neighboring cell cell2 restores the power amplification factor or the orientational angle to the initial value. A position, a name and the adjustment result of the overshoot coverage neighboring cell cell2 are reported to the OMC SON; and the OMC SON displays a result and updates no current configuration of the overshoot coverage neighboring cell cell2. Meanwhile, in this case, the overshoot coverage neighboring cell cell2 is not deleted from the temporary neighboring cell blacklist of the serving cell cell1 so that the overshoot coverage neighboring cell cell2 is prevented from being added again as the neighboring cell of the serving cell cell1.

In step 208, it is considered that the overshoot coverage has been solved, and the overshoot coverage is automatically solved. The base station located in the overshoot coverage neighboring cell cell2 reports information related to the overshoot coverage neighboring cell cell2 such as the position, name, power amplification factor, orientational angle and failure cause to the OMC SON.

This process is ended.

In step 209, the serving cell cell1 deletes the overshoot coverage neighboring cell cell2 from the temporary neighboring cell blacklist.

In step 210, the base station located in the overshoot coverage neighboring cell cell2 reports the information related to the overshoot coverage neighboring cell cell2 such as the position, name, power amplification factor, orientational angle and failure cause to the OMC SON. This process is ended.

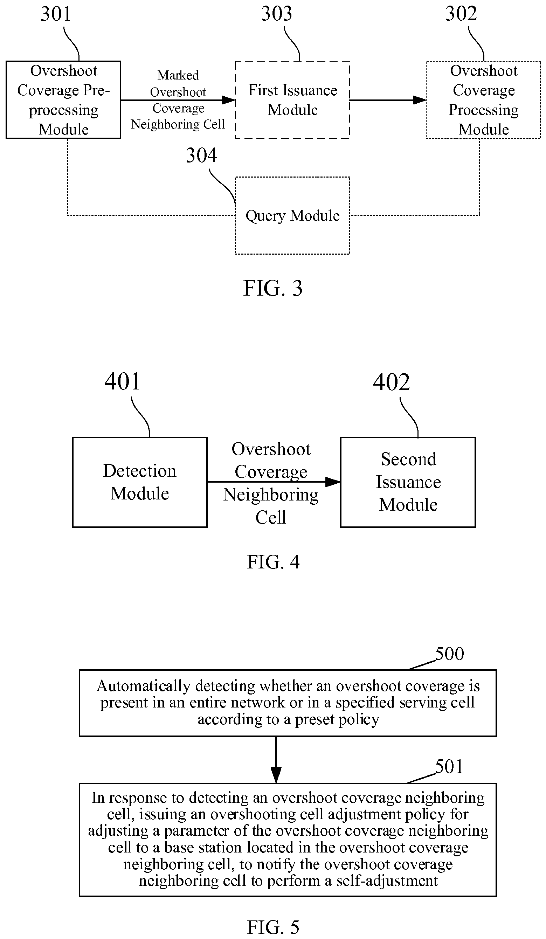

FIG. 3 is a block diagram illustrating a device for processing an overshoot coverage according to the present invention. As illustrated in FIG. 3, the device in FIG. 3 may be disposed in a base station of a serving cell and includes at least an overshoot coverage pre-processing module 301 and an overshoot coverage processing module 302.

The overshoot coverage pre-processing module 301 is configured to mark and delete a detected overshoot coverage neighboring cell.

The overshoot coverage processing module 302 is configured to, in response to receiving a request for adding the overshoot coverage neighboring cell within a preset time range, deliver an overshooting cell adjustment policy for adjusting a parameter of the overshoot coverage neighboring cell to the overshoot coverage neighboring cell, to reduce a coverage area of the overshoot coverage neighboring cell.

In an embodiment, when the overshoot coverage neighboring cell is detected again and a temporary neighboring cell addition request is received within the preset time range, the overshoot coverage processing module 302 is further configured to discard the temporary neighboring cell addition request and perform no processing.

In an embodiment, the device in FIG. 3 further includes a first deliverance module 303. The first deliverance module 303 is configured to deliver the overshooting cell adjustment policy for adjusting the parameter of the overshoot coverage neighboring cell and configured by an OMC SON to a base station located in the overshoot coverage neighboring cell through an X2 interface, to notify the overshoot coverage neighboring cell to perform a self-adjustment.

The overshooting cell adjustment policy includes, but is not limited to, automatically lowering a power amplification factor, a orientational angle or the like by a pre-configured stepping granularity, and reporting an adjustment result to a network management system for display.

In an embodiment, the overshoot coverage processing module 302 is further configured to, if the request for adding the overshoot coverage neighboring cell is received again within the preset time range, repeatedly deliver the overshooting cell adjustment policy for adjusting the parameter of the overshoot coverage neighboring cell to the overshoot coverage neighboring cell to reduce the coverage area of the overshoot coverage neighboring cell until the request for adding the overshoot coverage neighboring cell is no longer received within the preset time range.

In an embodiment, the device in FIG. 3 further includes a query module 304.

The query module 304 is configured to send a query request to the OMC SON, to query a change of a KPI of the serving cell and the overshoot coverage neighboring cell that happens before and after an automatic adjustment.

According to a query result, if a handover success rate and a call drop rate of the serving cell are improved (for example, the handover success rate is greater than a pre-configured handover success rate improvement ratio threshold, the call drop rate is less than a pre-configured call drop rate improvement ratio threshold, etc.) and the handover success rate and the call drop rate of the overshoot coverage neighboring cell are not deteriorated, it is thought that the overshoot coverage has been solved, the overshoot coverage pre-processing module 302 is notified to clear the overshoot coverage neighboring cell from the temporary neighboring cell blacklist of the serving cell, and the overshoot coverage processing module 302 is notified to report information such as a position, a name and the adjustment result of the serving cell and the overshoot coverage neighboring cell as first report information to the OMC SON. When receiving the first report information, the OMC SON displays a received adjustment result and updates a current configuration of the overshoot coverage neighboring cell.

If the KPI of the overshoot coverage neighboring cell deteriorates (for example, the handover success rate is less than a pre-configured handover success rate deterioration ratio threshold, the call drop rate is greater than a pre-configured call drop rate deterioration ratio threshold, etc.), the overshoot coverage processing module 302 is notified to notify the overshoot coverage neighboring cell to set an adjusted parameter such as the power amplification factor or the orientational angle back to an initial value, and report the position, the name and the adjustment of the overshoot coverage neighboring cell as second report information to the OMC SON. Meanwhile, the overshoot coverage neighboring cell cell2 is not deleted from the temporary neighboring cell blacklist of the serving cell cell1. When receiving the second report information, the OMC SON displays the received adjustment result and does not update the current configuration of the overshoot coverage neighboring cell.

When the device in FIG. 3 is disposed in the detected overshoot coverage neighboring cell,
the overshoot coverage processing module 302 is configured to, in response to receiving again the request for adding the overshoot coverage neighboring cell within the preset time range, repeatedly deliver the overshooting cell adjustment policy for adjusting the parameter of the overshoot coverage neighboring cell to the overshoot coverage neighboring cell to reduce the coverage area of the overshoot coverage neighboring cell until the request for adding the overshoot coverage neighboring cell is no longer received within the preset time range.

In an embodiment, the overshoot coverage processing module 302 is further configured to perform the following operations.

If the KPI of the overshoot coverage neighboring cell does not deteriorate, the position, the name and adjustment result of the overshoot coverage neighboring cell are reported as the first report information to the OMC SON.

If the KPI of the overshoot coverage neighboring cell deteriorates, the adjusted parameter such the power amplification factor or the orientational angle is automatically set back to the value before the adjustment, and the position, the name and adjustment result of the overshoot coverage neighboring cell is reported as the second report information to the OMC SON.

FIG. 4 illustrates another device for processing an overshoot coverage according to the present invention. The device may be disposed in a network management system such as an OMC SON and includes at least a detection module 401 and a second deliverance module 402.

The detection module 401 is configured to automatically detect whether overshoot coverage is present in an entire network or in a specified serving cell according to a preset policy.

The second deliverance module 402 is configured to, in response to detecting an overshoot coverage neighboring cell, deliver an overshooting cell adjustment policy for adjusting a parameter of the overshoot coverage neighboring cell to a base station located in the overshoot coverage neighboring cell, to notify the overshoot coverage neighboring cell to perform a self-adjustment. An overshoot adjustment and processing policy includes, but is not limited to, automatically lowering a power amplification factor, a orientational angle or the like by the pre-configured stepping granularity, and reporting an adjustment result to the network management system for display.

The detection module 401 is exemplarily configured to calculate a distance between a serving cell and a neighboring cell, a number of spaced cell layers and the like, compare them against a preset threshold, and if the threshold is reached or exceeded, determine that a condition of a one-dimensional ultra-far neighboring cell is met, and then compute whether the one-dimensional ultra-far neighboring cell has other ultra-far neighboring cells with the same algorithm. If the number of the other ultra-far neighboring cells of the one-dimensional ultra-far neighboring cell reaches a preset threshold, it is determined that the one-dimensional ultra-far neighboring cell is an overshoot coverage cell, that is, the detected overshoot coverage neighboring cell.

The device in FIG. 4 further includes a display module (not shown in FIG. 4). The display module is configured to display a received adjustment result and update a current configuration of the overshoot coverage neighboring cell according to received first report information; and display the received adjustment result and not update the current configuration of the overshoot coverage neighboring cell according to received second report information.

FIG. 5 is a flowchart illustrating another method for processing an overshoot coverage according to the present invention. As illustrated in FIG. 5, the method includes the following operations.

In step 500, whether overshoot coverage is present in an entire network or in a specified serving cell is automatically detected according to a preset policy.

In this step, an OMC SON automatically detects whether the overshoot coverage is present in the entire network or the specified serving cell according to the preset policy. An exemplary approach generally includes calculating a distance between a serving cell and a neighboring cell, a number of spaced cell layers and the like, comparing them against a preset threshold, and if the threshold is reached or exceeded, determining that a condition of a one-dimensional ultra-far neighboring cell is met, and then computing whether the one-dimensional ultra-far neighboring cell has other ultra-far neighboring cells with the same algorithm. If the number of the other ultra-far neighboring cells of the one-dimensional ultra-far neighboring cell reaches a preset threshold, it is determined that the one-dimensional ultra-far neighboring cell is an overshoot coverage cell, that is, a detected overshoot coverage neighboring cell.

In step 501, when an overshoot coverage neighboring cell is detected, an overshooting cell adjustment policy for adjusting a parameter of the overshoot coverage neighboring cell is delivered to a base station located in the overshoot coverage neighboring cell, to notify the overshoot coverage neighboring cell to perform a self-adjustment.

In this step, when detecting the overshoot coverage neighboring cell, the OMC SON delivers the overshooting cell adjustment policy for adjusting the parameter of the overshoot coverage neighboring cell to the base station located in the overshoot coverage neighboring cell, to notify the overshoot coverage neighboring cell to perform a self-adjustment. An overshoot adjustment and processing policy includes, but is not limited to, automatically lowering a power amplification factor, a orientational angle or the like by a pre-configured stepping granularity, and reporting an adjustment result to a network management system for display.

After step 501, the method in an embodiment further includes at least one of the following steps. One step is that the OMC SON displays a received adjustment result and updates a current configuration of the overshoot coverage neighboring cell in response to receiving first report information. Another step is that the OMC SON displays the received adjustment result and does not update the current configuration of the overshoot coverage neighboring cell in response to receiving second report information.

### INDUSTRIAL APPLICABILITY

According to the method for processing an overshoot coverage disclosed in the embodiments of the present invention, when the overshoot coverage neighboring cell is detected, on the one hand the detected overshoot coverage neighboring cell is deleted, and on the other hand, the overshooting cell adjustment policy for adjusting the parameter of the overshoot coverage neighboring cell is delivered to the overshoot coverage neighboring cell, thereby reducing the coverage area of the overshoot coverage neighboring cell, automatically solving the overshoot coverage problem.

## Claims

1. A method for processing an overshoot coverage, comprising:
marking, by a serving cell, a detected overshoot coverage neighboring cell and deleting the overshoot coverage neighboring cell from a neighbor list of the serving cell (100); and in response to receiving within a preset time range a request for adding the overshoot coverage neighboring cell to the neighbor list of the serving cell, delivering, by a base station located in the serving cell, an overshooting cell adjustment policy for adjusting a parameter of the overshoot coverage neighboring cell to a base station located in the overshoot coverage neighboring cell, to reduce a coverage area of the overshoot coverage neighboring cell (101),
**characterized in that** after the delivering, by the base station located in the serving cell, the overshooting cell adjustment policy for adjusting the parameter of the overshoot coverage neighboring cell to the base station located in the overshoot coverage neighboring cell (101), the method further comprises:
in response to receiving again the request for adding the overshoot coverage neighboring cell within the preset time range, repeatedly performing, by the base station located in the serving cell, the delivering the overshooting cell adjustment policy for adjusting the parameter of the overshoot coverage neighboring cell to the base station located in the overshoot coverage neighboring cell to reduce the coverage area of the overshoot coverage neighboring cell, until the request for adding the overshoot coverage neighboring cell is no longer received within the preset time range by the serving cell;
the method further comprises:
sending, by each of the serving cell and the overshoot coverage neighboring cell, a query request to an operation and maintenance center, OMC, self-organizing network, SON, to query a change of a key performance indicator, KPI, of the serving cell itself or the overshoot coverage neighboring cell itself that happens before and after an automatic adjustment;
in response to the KPI of the serving cell getting improved and the KPI of the overshoot coverage neighboring cell not deteriorating, removing a mark on the overshoot coverage neighboring cell; and reporting, by the base station located in the serving cell, information related to the serving cell and information related to the overshoot coverage neighboring cell to the OMC SON; and
in response to the KPI of the overshoot coverage neighboring cell deteriorating, notifying the overshoot coverage neighboring cell to set the adjusted parameter back to an initial value, and reporting the information related to the overshoot coverage neighboring cell to the OMC SON.

2. The method of claim 1, wherein after the marking, by the serving cell, the detected overshoot coverage neighboring cell and deleting the overshoot coverage neighboring cell from a neighbor list of the serving cell (100), and before the in response to receiving within a preset time range a request for adding the overshoot coverage neighboring cell to the neighbor list of the serving cell, delivering, by the base station located in the serving cell, the overshooting cell adjustment policy for adjusting a parameter of the overshoot coverage neighboring cell to the base station located in the overshoot coverage neighboring cell (101), the method further comprises:
delivering, by the base station located in the serving cell, the overshooting cell adjustment policy to the base station located in the overshoot coverage neighboring cell through an X2 interface, to notify the overshoot coverage neighboring cell to perform a self-adjustment.

3. The method of claim 1, wherein, before the marking, by the serving cell, a detected overshoot coverage neighboring cell, and deleting the overshoot coverage neighboring cell from a neighbor list of the serving cell (100), the method further comprises:
receiving, by the base station located in the detected overshoot coverage neighboring cell, the overshooting cell adjustment policy delivered by the OMC SON, to notify the overshoot coverage neighboring cell to perform a self-adjustment.

4. The method of claim 1, in condition that a number of downward adjustment times reaches a preset downward adjustment times threshold or a power of the overshoot coverage neighboring cell reaches a preset power threshold, the method further comprising:
in response to a KPI of the overshoot coverage neighboring cell not deteriorating, reporting, by the base station located in the overshoot coverage neighboring cell, information related to the base station itself to the OMC SON; and
in response to the KPI of the overshoot coverage neighboring cell deteriorating, automatically setting, by the overshoot coverage neighboring cell, the adjusted parameter back to a value before the adjustment, and reporting, by the base station located in the overshoot coverage neighboring cell, the information related to the base station itself to the OMC SON.

5. The method of any one of claims 1, 2, 3, and 4, wherein the overshooting cell adjustment policy comprises: automatically lowering a power amplification factor or an orientational angle by a pre-configured stepping granularity.

6. A device for processing an overshoot coverage, comprising an overshoot coverage pre-processing module (301) and an overshoot coverage processing module (302);
wherein the overshoot coverage pre-processing module is configured to mark and delete a detected overshoot coverage neighboring cell from a neighbor list of a serving cell where the device is located; and
the overshoot coverage processing module (302) is configured to, in response to receiving within a preset time range a request for adding the overshoot coverage neighboring cell to the neighbor list of the serving cell, deliver to a base station of the overshoot coverage neighboring cell an overshooting cell adjustment policy for adjusting a parameter of the overshoot coverage neighboring cell, to reduce a coverage area of the overshoot coverage neighboring cell,
**characterized in that** the overshoot coverage processing module (302) is further configured to, in response to receiving again the request for adding the overshoot coverage neighboring cell within the preset time range, repeatedly perform the operation of delivering to the base station located in the overshoot coverage neighboring cell the overshooting cell adjustment policy for adjusting the parameter of the overshoot coverage neighboring cell to reduce the coverage area of the overshoot coverage neighboring cell until the request for adding the overshoot coverage neighboring cell is no longer received within the preset time range;
the device further comprises: a query module (304), which is configured to:
send a query request to an operation and maintenance center, OMC, self-organizing network, SON, to query a change of a key performance indicator, KPI, of the serving cell where the device is located and a change of a KPI of the overshoot coverage neighboring cell that happen before and after an automatic adjustment;
in response to the KPI of the serving cell where the device is located getting improved and the KPI of the overshoot coverage neighboring cell not deteriorating, notify the overshoot coverage pre-processing module to remove the overshoot coverage neighboring cell from a temporary neighboring cell blacklist of the serving cell, and notify the overshoot coverage processing module to take information related to the serving cell and information related to the overshoot coverage neighboring cell as first report information and report the first report information to the OMC SON; and
in response to the KPI of the overshoot coverage neighboring cell deteriorating, inform the overshoot coverage processing module to notify the overshoot coverage neighboring cell to set the adjusted parameter back to an initial value, take the information related to the overshoot coverage neighboring cell as second report information and report the second report information to the OMC SON.

7. The device of claim 6, further comprising: a first deliverance module (303), configured to deliver, to the base station located in the overshoot coverage neighboring cell through an X2 interface, the overshooting cell adjustment policy for adjusting the parameter of the overshoot coverage neighboring cell, which is configured by the OMC SON, to notify the overshoot coverage neighboring cell to perform a self-adjustment.

8. A storage medium, which stores program code configured for performing the method of any one of claims 1 to 5.

## Patentansprüche

1. Verfahren zum Verarbeiten einer Overshoot-Abdeckung, umfassend:
Markieren, durch eine bedienende Zelle, einer detektierten Overshoot-Abdeckung-Nachbarzelle und Löschen der Overshoot-Abdeckung-Nachbarzelle aus einer Nachbarliste der bedienenden Zelle (100); und als Reaktion auf das Empfangen, innerhalb eines voreingestellten Zeitbereichs, einer Anforderung zum Hinzufügen der Overshoot-Abdeckung-Nachbarzelle zu der Nachbarliste der bedienenden Zelle, Liefern, durch eine Basisstation, die sich in der bedienenden Zelle befindet, einer Overshooting-Zellenanpassungsrichtlinie zum Anpassen eines Parameters der Overshoot-Abdeckung-Nachbarzelle an eine Basisstation, die sich in der Overshoot-Abdeckung-Nachbarzelle befindet, um einen Abdeckungsbereich der Overshoot-Abdeckung-Nachbarzelle (101) zu reduzieren,
**dadurch gekennzeichnet, dass** das Verfahren nach dem Liefern, durch die Basisstation, die sich in der bedienenden Zelle befindet, der Overshooting-Zellenanpassungsrichtlinie zum Anpassen des Parameters der Overshoot-Abdeckung-Nachbarzelle an die Basisstation, die sich in der Overshoot-Abdeckung-Nachbarzelle (101) befindet, ferner umfasst:
Als Reaktion auf das erneute Empfangen der Anforderung zum Hinzufügen der Overshoot-Abdeckung-Nachbarzelle innerhalb des voreingestellten Zeitbereichs, wiederholtes Durchführen, durch die Basisstation, die sich in der bedienenden Zelle befindet, der Lieferung der Overshooting-Zellenanpassungsrichtlinie zum Anpassen des Parameters der Overshoot-Abdeckung-Nachbarzelle an die Basisstation, die sich in der Overshoot-Abdeckung-Nachbarzelle befindet, um den Abdeckungsbereich der Overshoot-Abdeckung-Nachbarzelle zu reduzieren, bis die Anforderung zum Hinzufügen der Overshoot-Abdeckung-Nachbarzelle nicht mehr innerhalb des voreingestellten Zeitbereichs durch die bedienende Zelle empfangen wird;
wobei das Verfahren ferner umfasst:
Senden, durch sowohl die bedienende Zelle als auch die Overshoot-Abdeckung-Nachbarzelle, einer Abfrageanforderung zu einem selbstorganisierenden Netzwerk, SON, eines Betriebs- und Wartungszentrums, OMC, um eine Änderung einer Leistungskennzahl, KPI, der bedienenden Zelle selbst oder der Overshoot-Abdeckung-Nachbarzelle selbst abzufragen, die vor und nach einer automatischen Anpassung stattfindet;
als Reaktion darauf, dass die KPI der bedienenden Zelle verbessert wird und die KPI der Overshoot-Abdeckung-Nachbarzelle sich nicht verschlechtert, Entfernen einer Markierung an der Overshoot-Abdeckung-Nachbarzelle; und Melden, durch die Basisstation, die sich in der bedienenden Zelle befindet, von Informationen bezüglich der bedienenden Zelle und Informationen bezüglich der Overshoot-Abdeckung-Nachbarzelle an das OMC-SON; und
als Reaktion darauf, dass sich die KPI der Overshoot-Abdeckung-Nachbarzelle verschlechtert, Benachrichtigen der Overshoot-Abdeckung-Nachbarzelle, den angepassten Parameter zurück auf einen Anfangswert zu setzen, und Melden der Informationen bezüglich der Overshoot-Abdeckung-Nachbarzelle an das OMC-SON.

2. Verfahren nach Anspruch 1, wobei das Verfahren nach dem Markieren, durch die bedienende Zelle, der detektierten Overshoot-Abdeckung-Nachbarzelle und dem Löschen der Overshoot-Abdeckung-Nachbarzelle aus einer Nachbarliste der bedienenden Zelle (100), und vor dem, als Reaktion auf das Empfangen, innerhalb eines voreingestellten Zeitbereichs, einer Anforderung zum Hinzufügen der Overshoot-Abdeckung-Nachbarzelle zu der Nachbarliste der bedienenden Zellen, Liefern, durch die Basisstation, die sich in der bedienenden Zelle befindet, der Overshooting-Zellenanpassungsrichtlinie zum Anpassen eines Parameters der Overshoot-Abdeckung-Nachbarzelle an die Basisstation, die sich in der Overshoot-Abdeckung-Nachbarzelle (101) befindet, ferner umfasst:
Liefern, durch die Basisstation, die sich in der bedienenden Zelle befindet, der Overshooting-Zellenanpassungsrichtlinie an die Basisstation, die sich in der Overshoot-Abdeckung-Nachbarzelle befindet, über eine X2-Schnittstelle, um die Overshoot-Abdeckung-Nachbarzelle zu benachrichtigen, eine Selbstanpassung durchzuführen.

3. Verfahren nach Anspruch 1, wobei das Verfahren vor dem Markieren, durch die bedienende Zelle, einer detektierten Overshoot-Abdeckung-Nachbarzelle und dem Löschen der Overshoot-Abdeckung-Nachbarzelle aus einer Nachbarliste der bedienenden Zelle (100) ferner umfasst:
Empfangen, durch die Basisstation, die sich in der detektierten Overshoot-Abdeckung-Nachbarzelle befindet, der Overshooting-Zellenanpassungsrichtlinie, die durch das OMC-SON geliefert wird, um die Overshoot-Abdeckung-Nachbarzelle zu benachrichtigen, eine Selbstanpassung durchzuführen.

4. Verfahren nach Anspruch 1, wobei das Verfahren unter der Bedingung, dass eine Anzahl von Abwärts-Anpassungszeiten eine voreingestellte Abwärts-Anpassungszeitenschwelle erreicht oder eine Leistung der Overshoot-Abdeckung-Nachbarzelle eine voreingestellte Leistungsschwelle erreicht, ferner umfasst:
Als Reaktion darauf, dass sich eine KPI der Overshoot-Abdeckung-Nachbarzelle nicht verschlechtert, Melden, durch die Basisstation, die sich in der Overshoot-Abdeckung-Nachbarzelle befindet, von Informationen bezüglich der Basisstation selbst an das OMC-SON; und
als Reaktion darauf, dass sich die KPI der Overshoot-Abdeckung-Nachbarzelle verschlechtert, automatisches Setzen, durch die Overshoot-Abdeckung-Nachbarzelle, des angepassten Parameters zurück auf einen Wert vor der Anpassung, und Melden, durch die Basisstation, die sich in der Overshoot-Abdeckung-Nachbarzelle befindet, der Informationen bezüglich der Basisstation selbst an das OMC-SON.

5. Verfahren nach einem der Ansprüche 1, 2, 3 und 4, wobei die Overshooting-Zellenanpassungsrichtlinie umfasst: Automatisches Senken eines Leistungsverstärkungsfaktors oder eines Orientierungswinkels um eine vorkonfigurierte schrittweise Granularität.

6. Vorrichtung zum Verarbeiten einer Overshoot-Abdeckung, die ein Overshoot-Abdeckung-Vorverarbeitungsmodul (301) und ein Overshoot-Abdeckung-Verarbeitungsmodul (302) umfasst;
wobei das Overshoot-Abdeckung-Vorverarbeitungsmodul konfiguriert ist, eine detektierte Overshoot-Abdeckung-Nachbarzelle zu markieren und aus einer Nachbarliste einer bedienenden Zelle zu löschen, in der sich die Vorrichtung befindet; und
das Overshoot-Abdeckung-Verarbeitungsmodul (302) konfiguriert ist, als Reaktion auf das Empfangen, innerhalb eines voreingestellten Zeitbereichs, einer Anforderung zum Hinzufügen der Overshoot-Abdeckung-Nachbarzelle zu der Nachbarliste der bedienenden Zelle, eine Overshooting-Zellenanpassungsrichtlinie zum Anpassen eines Parameters der Overshoot-Abdeckung-Nachbarzelle an eine Basisstation der Overshoot-Abdeckung-Nachbarzelle zu liefern, um einen Abdeckungsbereich der Overshoot-Abdeckung-Nachbarzelle zu reduzieren,
**dadurch gekennzeichnet, dass** das Overshoot-Abdeckung-Verarbeitungsmodul (302) ferner konfiguriert ist, als Reaktion auf das erneute Empfangen der Anforderung zum Hinzufügen der Overshoot-Abdeckung-Nachbarzelle innerhalb des voreingestellten Zeitbereichs, wiederholt die Operation der Lieferung der Overshooting-Zellenanpassungsrichtlinie zum Anpassen des Parameters der Overshoot-Abdeckung-Nachbarzelle an die Basisstation, die sich in der Overshoot-Abdeckung-Nachbarzelle befindet, durchzuführen, um den Abdeckungsbereich der Overshoot-Abdeckung-Nachbarzelle zu reduzieren, bis die Anforderung zum Hinzufügen der Overshoot-Abdeckung-Nachbarzelle nicht mehr innerhalb des voreingestellten Zeitbereichs empfangen wird;
wobei die Vorrichtung ferner umfasst: Ein Abfragemodul (304), das konfiguriert ist zum:
Senden einer Abfrageanforderung zu einem selbstorganisierenden Netzwerk, SON, eines Betriebs- und Wartungszentrums, OMC, um eine Änderung einer Leistungskennzahl, KPI, der bedienenden Zelle, in der sich die Vorrichtung befindet, und eine Änderung einer KPI der Overshoot-Abdeckung-Nachbarzelle abzufragen, die vor und nach einer automatischen Anpassung stattfindet;
als Reaktion darauf, dass die KPI der bedienenden Zelle, in der sich die Vorrichtung befindet, verbessert wird und die KPI der Overshoot-Abdeckung-Nachbarzelle sich nicht verschlechtert, Benachrichtigen des Overshoot-Abdeckung-Vorverarbeitungsmoduls, die Overshoot-Abdeckung-Nachbarzelle aus einer temporären Nachbarzellen-Blacklist der bedienenden Zelle zu entfernen, und Benachrichtigen des Overshoot-Abdeckung-Verarbeitungsmoduls, Informationen bezüglich der bedienenden Zelle und Informationen bezüglich der Overshoot-Abdeckung-Nachbarzelle als erste Berichtsinformationen anzunehmen und die ersten Berichtsinformationen an das OMC-SON zu melden; und
als Reaktion darauf, dass sich die KPI der Overshoot-Abdeckung-Nachbarzelle verschlechtert, Informieren des Overshoot-Abdeckung-Verarbeitungsmoduls, die Overshoot-Abdeckung-Nachbarzelle zu benachrichtigen, den angepassten Parameter zurück auf einen Anfangswert zu setzen, die Informationen bezüglich der Overshoot-Abdeckung-Nachbarzelle als zweite Berichtsinformationen anzunehmen und die zweiten Berichtsinformationen an das OMC-SON zu melden.

7. Vorrichtung nach Anspruch 6, ferner umfassend: Ein erstes Liefermodul (303), das konfiguriert ist, die Overshooting-Zellenanpassungsrichtlinie zum Anpassen des Parameters der Overshoot-Abdeckung-Nachbarzelle, die durch das OMC-SON konfiguriert wird, über eine X2-Schnittstelle an die Basisstation, die sich in der Overshoot-Abdeckung-Nachbarzelle befindet, zu liefern, um die Overshoot-Abdeckung-Nachbarzelle zu benachrichtigen, eine Selbstanpassung durchzuführen.

8. Speichermedium, das Programmcode speichert, der zum Durchführen des Verfahrens nach einem der Ansprüche 1 bis 5 konfiguriert ist.

## Revendications

1. Procédé de traitement d'un dépassement de couverture, comprenant :
marquage, par une cellule de desserte, une cellule voisine de dépassement de couverture détectée et suppression de la cellule voisine de dépassement de couverture d'une liste de voisins de la cellule de desserte (100) ; et en réponse à la réception, dans une plage de temps prédéfinie, d'une demande d'ajout de la cellule voisine de dépassement de couverture à la liste de voisins de la cellule de desserte, fourniture, par une station de base située dans la cellule de desserte, d'une politique d'ajustement de cellule de dépassement pour ajuster un paramètre de la cellule voisine de dépassement de couverture à une station de base située dans la cellule voisine de dépassement de couverture, afin de réduire une zone de couverture de la cellule voisine de dépassement de couverture (101),
**caractérisé en ce qu'**après la livraison, par la station de base située dans la cellule de desserte, de la politique d'ajustement de la cellule de dépassement pour ajuster le paramètre de la cellule voisine de dépassement de couverture à la station de base située dans la cellule voisine de dépassement de couverture (101), le procédé comprend en outre :
en réponse à une nouvelle réception de la demande d'ajout de la cellule voisine de dépassement dans la plage de temps prédéfinie, exécution répétée, par la station de base située dans la cellule de desserte, de la fourniture de la politique d'ajustement de la cellule de dépassement de couverture pour ajuster le paramètre de la cellule voisine à dépassement de couverture à la station de base située dans la cellule voisine à dépassement de couverture afin de réduire la zone de couverture de la cellule voisine à dépassement de couverture, jusqu'à ce que la demande d'ajout de la cellule voisine à dépassement de couverture ne soit plus reçue dans la plage de temps prédéfinie par la cellule de desserte ;
le procédé comprend en outre
envoi, par la cellule de desserte et la cellule voisine de dépassement de couverture, d'une demande d'interrogation à un centre d'exploitation et de maintenance, OMC, à un réseau auto-organisé, SON, pour demander un changement d'un indicateur clé de performance, IKP, de la cellule de desserte elle-même ou de la cellule voisine de dépassement de couverture elle-même qui se produit avant et après un ajustement automatique ;
en réponse à l'amélioration de l'IKP de la cellule de desserte et à la non-détérioration de l'IKP de la cellule voisine de dépassement de couverture, suppression d'une marque sur la cellule voisine de dépassement de couverture ; et rapport par la station de base située dans la cellule de desserte, des informations relatives à la cellule de desserte et des informations relatives à la cellule voisine de dépassement de couverture à la OMC SON ; et
en réponse à la détérioration de l'indicateur de performance clé de la cellule voisine de dépassement de couverture, notification à la cellule voisine de dépassement de couverture de ramener le paramètre ajusté à une valeur initiale, et communication des informations relatives à la cellule voisine de dépassement de couverture au système OMC SON.

2. Procédé selon la revendication 1, dans lequel après le marquage, par la cellule de desserte, de la cellule voisine de dépassement de couverture détectée et la suppression de la cellule voisine de dépassement de couverture d'une liste de voisins de la cellule de desserte (100), et avant le marquage, en réponse à la réception dans une plage de temps prédéfinie d'une demande d'ajout de la cellule voisine de dépassement de couverture à la liste de voisins de la cellule de desserte, fourniture, par la station de base située dans la cellule de desserte, de la politique d'ajustement de la cellule de dépassement pour ajuster un paramètre de la cellule voisine de de dépassement de couverture à la station de base située dans la cellule voisine de dépassement de couverture (101), le procédé comprenant en outre :
fourniture, par la station de base située dans la cellule de desserte, de la politique d'ajustement de la cellule de dépassement à la station de base située dans la cellule voisine de dépassement de couverture via une interface X2, afin de notifier à la cellule voisine de dépassement de couverture d'effectuer un auto-ajustement.

3. Procédé de la revendication 1, dans lequel, avant le marquage, par la cellule de desserte, d'une cellule voisine de dépassement de couverture détectée, et la suppression de la cellule voisine de dépassement de couverture d'une liste de voisins de la cellule de desserte (100), le procédé comprend en outre :
réception, par la station de base située dans la cellule voisine de dépassement de couverture détectée, de la politique d'ajustement de la cellule de dépassement fournie par le SON OMC, afin de notifier à la cellule voisine de dépassement de couverture qu'elle doit procéder à un auto-ajustement.

4. Procédé selon la revendication 1, à condition qu'un nombre de temps d'ajustement à la baisse atteigne un seuil prédéfini de temps d'ajustement à la baisse ou qu'une puissance de la cellule voisine de dépassement de couverture atteigne un seuil de puissance prédéfini, la méthode comprend en outre :
en réponse à un IKP de la cellule voisine de dépassement de couverture qui ne se détériore pas, communication, par la station de base située dans la cellule voisine de dépassement de couverture, d'informations relatives à la station de base elle-même au OMC SON ; et
en réponse à la détérioration de l'indicateur de performance clé de la cellule voisine de dépassement de couverture, la cellule voisine de dépassement de couverture ramène automatiquement le paramètre ajusté à une valeur antérieure à l'ajustement, et la station de base située dans la cellule voisine de dépassement de couverture communique au système OMC SON les informations relatives à la station de base elle-même.

5. Procédé selon l'une des revendications 1, 2, 3 et 4, dans laquelle la politique d'ajustement de la cellule de dépassement comprend : l'abaissement automatique d'un facteur d'amplification de puissance ou d'un angle d'orientation selon une granularité d'échelon préconfigurée.

6. Dispositif de traitement d'un dépassement de couverture, comprenant un module de prétraitement du dépassement de couverture (301) et un module de traitement de du dépassement de couverture (302) ;
dans lequel le module de prétraitement du dépassement de couverture est configuré pour marquer et supprimer une cellule voisine de dépassement de couverture détectée d'une liste de voisins d'une cellule de desserte où se trouve l'appareil ; et
le module de traitement du dépassement de couverture (302) est configuré pour, en réponse à la réception, dans une plage de temps prédéfinie, d'une demande d'ajout de la cellule voisine de dépassement de couverture à la liste de voisins de la cellule de desserte, fournir à une station de base de la cellule voisine de dépassement de couverture d'une politique d'ajustement de la cellule de dépassement pour ajuster un paramètre de la cellule voisine de dépassement de couverture, afin de réduire une zone de couverture de la cellule voisine de dépassement de couverture,
**caractérisé par le fait que** le module de traitement du dépassement (302) de couverture est en outre configuré pour, en réponse à une nouvelle réception de la demande d'ajout de la cellule voisine de dépassement de couverture dans l'intervalle de temps prédéfini, effectuer de manière répétée l'opération consistant à fournir à la station de base située dans la cellule voisine de dépassement de couverture de la politique d'ajustement de la cellule de dépassement pour ajuster le paramètre de la cellule voisine dépassement de couverture afin de réduire la zone de couverture de la cellule voisine de dépassement de couverture, jusqu'à ce que la demande d'ajout de la cellule voisine de dépassement de couverture ne soit plus reçue dans l'intervalle de temps prédéfini ;
le dispositif comprend en outre : un module d'interrogation (304), qui est configuré pour :
envoyer une requête à un centre d'exploitation et de maintenance, OMC, réseau auto-organisé, SON, pour demander un changement d'un indicateur clé de performance, KPI, de la cellule de desserte où l'appareil est situé et un changement d'un KPI de la cellule voisine de dépassement de couverture qui se produisent avant et après un ajustement automatique ;
en réponse à l'amélioration de l'IKP de la cellule de desserte où se trouve l'appareil et à l'absence de détérioration de l'IKP de la cellule voisine de dépassement de couverture, notification au module de prétraitement du dépassement de couverture de retirer la cellule voisine de dépassement de couverture d'une liste noire temporaire de cellules voisines de la cellule de desserte, et notification au module de traitement du dépassement de couverture de prendre les informations relatives à la cellule de desserte et les informations relatives à la cellule voisine de dépassement de couverture en tant que premières informations de rapport et de rapport des premières informations de rapport au SON OMC ; et
en réponse à la détérioration de l'indicateur de performance clé de la cellule voisine de dépassement de couverture, information du module de traitement du dépassement de couverture pour notifier à la cellule voisine de dépassement de couverture de ramener le paramètre ajusté à une valeur initiale, prendre les informations relatives à la cellule voisine de dépassement de couverture en tant que deuxième information de rapport et rapporter la deuxième information de rapport au SON OMC.

7. Dispositif selon la revendication 6, comprenant en outre : un premier module de livraison (303), configuré pour livrer, à la station de base située dans la cellule voisine de dépassement de couverture par l'intermédiaire d'une interface X2, la politique d'ajustement de la cellule de dépassement pour ajuster le paramètre de la cellule voisine de dépassement de couverture, qui est configurée par le SON OMC, pour notifier à la cellule voisine de dépassement de couverture d'effectuer un auto-ajustement.

8. Support de stockage, qui stocke un code de programme configuré pour exécuter un procédé selon l'une des revendications 1 à 5.
